# EUROPÄISCHE PATENTANMELDUNG

(11) **EP 1 579 765 A2**
(43) Veröffentlichungstag der Anmeldung: **28.09.2005**
(21) Anmeldenummer: 05102245.7
(22) Anmeldetag: 21.03.2005
(51) Int. Cl.: A21C 9/08, A21C 7/01, A21C 11/10

(54) **Querreihig unterschiedliche Teiglingsform-Herstellung**

(30) Priorität: 22.03.2004 DE 102004014271; 31.03.2004 DE 102004016470
(71) Anmelder: Fritsch GmbH, 97348 Markt Einersheim (DE)
(72) Erfinder: Brunken, Heiko, 97340 Marktbreit (DE)
(74) Vertreter: Götz, Georg Alois

(57) **Zusammenfassung**

Verfahren zur Herstellung von unterschiedlich gestalteten Teigformlingen (4,5,6) aus einem kontinuierlichen Teigband (2,3), wobei dieses bezüglich seiner Längsrichtung längsgeschnitten und schräg-, rund- und/oder quergestanzt oder -geschnitten wird, und die dabei entstehenden Teigstücke (4a,4b,4c) voneinander entfernt und in eine gemeinsame Förderrichtung (1) bewegt werden, wobei in der weiteren Beförderung die Teigstücke (4a,4b,4c) gleichzeitig zu den Teigformlingen (4,5,6) unterschiedlicher Gestalt verarbeitet und dabei ganz oder teilweise in aufeinander folgenden Querreihen (7a bis 7g) nebeneinander liegend gehalten und/oder zum jeweiligen Nebeneinanderliegen in aufeinander folgenden Querreihen gebracht werden, wobei die Querreihen (7a bis 7g) quer zur Förderrichtung (1) verlaufen und im Zuge der Beförderung Teigstücke (4a,4b,4c) oder Teigformlinge (4,5,6) unterschiedlicher Gestalt erhalten.

## Beschreibung

Die Erfindung bezieht sich auf ein Verfahren zur gleichzeitigen Herstellung unterschiedlicher Gebäckformen aus einem gemeinsamen Teigband gemäß Oberbegriff des Patentanspruchs 1. Weiterhin bezieht sich die Erfindung auf eine Teigverarbeitungsanlage gemäß Oberbegriff des Anspruchs 21 bzw. 22 zur Durchführung des Verfahrens nach Anspruch 1. Ferner bezieht sich die Erfindung auf eine Verzögerungseinrichtung gemäß Oberbegriff der Ansprüche 26 beziehungsweise 29.

Maschinen zum Schneiden, Bearbeiten und Formen von Teig zu Gebäckstücken sind in vielen verschiedenen Ausführungsformen bekannt. Die DE 25 12 776 offenbart z. B. eine Anlage für die Aufbereitung und Herstellung unterschiedlicher Brotsorten. Bei dieser Anlage werden auf mehreren parallel laufenden Teigbearbeitungsbahnen Brote in unterschiedlichen Formen, so z. B. Rund- oder Langbrote aber auch Kasten- oder Flachbrote, hergestellt. Diese Anlage kann somit verschiedene Anlagenteile bei der Produktion unterschiedlicher Brotsorten gemeinsam nutzen und nur die bei unterschiedlichen Brotsorten verschiedenen Bearbeitungsschritte werden auf den getrennten parallelen Teigbearbeitungsbahnen durchgeführt. Dazu werden die Teigstücke auf einem gemeinsamen Teilstück der Anlage vorbereitet, z. B. rundgewirkt. Anschließend werden die Teigstücke je nach gewünschtem Endprodukt automatisch in die zugeordnete Teigverarbeitungslinie eingebracht. Auf der anderen, parallelen Teigverarbeitungsbahn findet keine gleichzeitige Teigbearbeitung statt. Mit dieser Vorrichtung wird also immer nur eine Sorte Brot gleichzeitig hergestellt.

In US 5 063 839 wird eine Teigbearbeitungsmaschine zur Herstellung von unterschiedlich großen Torten bzw. Kuchenböden offenbart. In dieser Maschine können Kuchen bzw. Tortenböden unterschiedlichen Durchmessers gleichzeitig und in einer Linie hergestellt werden. Es ist aber bei dieser Maschine nicht möglich, grundsätzlich unterschiedliche Formen gleichzeitig und getaktet zu verarbeiten.

Eine Maschine zur Herstellung verschiedenartiger Kleingebäcksorten ist in DE 43 09 431 offenbart. Bei dieser Maschine werden unterschiedliche Gebäcksorten durch Auswechseln der Messkolben in Messkammerträger der Kopfmaschine realisiert. Es können also mit dieser Maschine verschiedenartige Gebäcksorten hergestellt werden, jedoch immer nur eine Sorte zur gleichen Zeit.

Es ist mit den Maschinen nach dem Stand der Technik zwar möglich, in einfacher und kostengünstiger Weise unterschiedliche Gebäcksorten herzustellen. Allerdings müssen zur Herstellung von unterschiedlich geformten Gebäckstücken immer entweder unterschiedliche Produktionslinien benutzt werden, oder es muss eine Produktionslinie zunächst zur Produktion einer Gebäcksorte benutzt werden, diese dann umgerüstet und für die nächste Gebäcksorte verwendet werden. Um am Ende des Produktionsprozesses unterschiedliche Gebäcksorten zusammenzubringen, ist es daher immer erforderlich, dass manuelle Bedienungsschritte durchgeführt werden. Entweder müssen Gebäckstücke von verschiedenen Produktionslinien zusammengebracht werden, oder es müssen zunächst die einen Gebäckstücke produziert werden, danach jeweils die weiteren und aus diesen Produktionsmengen müssen dann jeweils Gebäckmischungen zusammengestellt werden.

Durch die dabei notwendigen manuellen Zusammenfügungsschritte kann eine optimale Hygiene bei der Produktion der Gebäckstücke nur schwer gewährleistet werden. Für optimale Hygiene ist daher eine möglichst minimale Anzahl an manuellen Handhabungen der ganz oder teilweise fertig gestellten Gebäckstücke anzustreben. Weiterhin können durch die manuelle Handhabung der Gebäckstücke Beschädigungen bei denselben auftreten. Durch einen automatisierten Transport und/oder Verpackung können solche Beschädigungen minimiert und auch hygienischen Problemen vorgebeugt werden.

Bei der Nutzung einer Produktionslinie für mehrere Gebäcksorten durch zeitlich versetzte Produktion entsteht zusätzlich das Problem, dass die zuerst produzierten Gebäckstücke bei der Verpackung nicht mehr so frisch sind wie die zuletzt produzierten. Die Gesamthaltbarkeit bzw. Gesamtfrische einer derartigen Gebäckmischung muss also immer nach dem ältesten Produkt der Mischung angesetzt werden. Dementsprechend ergibt sich eine eventuell kürzere Verkaufsperiode für die produzierten Gebäckstücke.

Es ergibt sich also die Aufgabe, ein System zur Bildung einer Gebäckmischung zur Verfügung zu stellen. Diese Aufgabe wird durch die vorliegende Erfindung nach Patentanspruch 1 gelöst. Weitere vorteilhafte Ausgestaltungen der Erfindung ergeben sich aus den abhängigen Ansprüchen.

Die Erfindung basiert auf der Grundidee, unterschiedliche Gebäcksorten aus einem gemeinsamen Teigband gleichzeitig herzustellen, was im wesentlichen mit Standard-Gerätetechnik erfolgen kann. Bei einem erfindungsgemäßen Verfahren zur Herstellung von Teigformlingen für die Produktion von Gebäckstücken wird zunächst ein kontinuierliches Teigband mittels eines Teigbandformers ausgeformt. Dazu wird das Teigband, nachdem es vom Satellitenkopf abgewalzt wurde, mit einem Querwalzwerk (bspw. Einem Spiralquerwalzwerk) auf die Endteigstärke und -breite ausgerollt. Nach der Kalibrierung und Ausrichtung mittels des Kalibrierkopfes und Centerdevice wird das Teigband in seiner Längsrichtung entsprechend den Erfordernissen für die Teigformlinge geschnitten. Die geschnittenen parallelen Teigbahnen werden zunächst gespreizt, wobei die Achsabstände sich unterscheiden können, und dann je nach Erfordernis zu einzelnen Teigformlingen abgetrennt. Hierbei kann in Quer- oder Schrägrichtung gestanzt oder geschnitten werden, es können aber auch runde Teigstücke ausgestanzt oder geschnitten werden. Die solcherart entstandenen Teigstücke befinden sich in Querrichtung zum ursprünglichen Teigband immer noch auf einer Reihe. In weiteren Bearbeitungsschritten werden die parallel in einer Reihe befindlichen Teigstücke mittels Vorrichtungen zum Formen des Teiges weiterbearbeitet, wobei jeweils alle oder wahlweise nur ein Teil der Teigstücke, die sich in einer Reihe befinden, bearbeitet werden können. Durch die Bearbeitung der Teigstücke in Formwirkanlagen werden diese zwangsläufig in ihrer Bewegung relativ zu den nicht bearbeiteten Teigstücken in der gleichen Querreihe beschleunigt oder verzögert. Es ist also möglich, dass sich Teigstücke, die vor der Bearbeitung eines Teils der Querreihe sich auf einer Linie innerhalb der Querreihe befunden haben, nach dem Durchlauf durch die Formwirkvorrichtung nicht mehr in dieser Linie befinden. Die verbliebene Querreihe ist somit um ein oder mehrere Teigstück(e) vermindert. Eine solche Anordnung der Teigstücke ist jedoch nicht wünschenswert, da die in einer Reihe befindlichen, zu derselben Gebäckmischungseinheit gehörenden Teigstücke für eine automatisierte Weiterverarbeitung bzw. Weitertransport am Ende der Formwirkungsprozesse auf gleicher Höhe bzw. in gleicher Querreihe befindlich sein müssen. Für das erfindungsgemäße Verfahren und/oder die erfindungsgemäße Anlage ist daher im Rahmen der allgemeinen Erfindungsidee eine Verzögerungs- oder Beschleunigungseinrichtung zur Änderung der Lage der Teigstücke bzw. Teigformlinge vorgesehen, die sicherstellt, dass sich die Teigformlinge nach der Bearbeitung wieder auf einer Linie bzw. in der Flucht einer Querreihe oder einer nachfolgenden bzw. vorauseilenden Querreihe befinden (vgl. Patentansprüche 26 und 29).

Am Ende des Bearbeitungsbereichs werden die Querreihen von Teigformlingen oder Gebäckstücken nebeneinander liegend auf einer stillgehaltenen Unterlage abgesetzt. In einer alternativen Ausführungsform können die Teigformlinge oder Gebäckstücke auch reihenweise (Querreihe für Querreihe) vom laufenden Transportband abgehoben und zusammen auf einer Unterlage abgesetzt werden. Von der genannten Unterlage, auf der sich die nun still liegenden Teigformlinge oder Gebäckstücke befinden, können sie (gegebenenfalls nach weiterer Bearbeitung wie zum Beispiel Backen) entnommen werden und zusammen als Gebäckmix verpackt werden. Das Entnehmen und Verpacken kann hierbei vorteilhaft in hygienischer Art und Weise und bei Schonung der fertiggestellten Erzeugnisse mittels Maschinen automatisch erfolgen.

Damit beim erfindungsgemäßen Verfahren die Anzahl der notwendigen manuellen Handhabungen minimiert beziehungsweise auf manuelle Handhabungen vollständig verzichtet werden kann, ist es von besonders großer Bedeutung, dass die Teigformlinge oder Gebäckstücke nach dem Durchlaufen der Teigformgebungsvorrichtungen sich nebeneinander liegend in einer Reihe quer zur Förderrichtung der Teigbearbeitungsanlage befinden. Da es sich bei verschiedenen Teigformgebungsvorrichtungen, die zum Beispiel einem Langwirker, nicht vermeiden lässt, dass die bearbeiteten Teigstücke relativ zu den Teigstücken, die nicht bearbeitet werden, verzögert oder beschleunigt werden, muss entweder am Ende der Formgebungsvorrichtung oder in einem nachfolgenden Schritt dafür gesorgt werden, dass die bearbeiteten und somit aus der Querreihe entfernten Teigformlinge wieder in einer Querreihe zum Liegen auf einem Förderband gebracht werden. Um diese Korrekturen der Lage der bearbeiteten Teigformlinge ausführen zu können, ist es vorteilhaft, wenn innerhalb einer Querreihe mehrere Gruppen oder Verbände nebeneinander liegender Teigstücke mit jeweils einheitlicher Gestalt gebildet werden. Weiterhin ist es vorteilhaft, wenn diese Teigformlinge eines Verbandes untereinander gleiche Abstände zur Förderrichtung aufweisen. Da sich durch die Bearbeitung der Teigformlinge in den Formgebungsvorrichtungen der Teigverarbeitungsanlage die Länge beziehungsweise Ausdehnung der bearbeiteten Teigformlinge in Querrichtung ändern kann, ist es aber möglich, dass die Unterschiede zwischen den einzelnen Teigformlingen sich von Verband zu Verband unterscheiden. Weiterhin kann es aus produktionstechnischen Gründen geboten sein, dass die Abstände der Teigformlinge in unterschiedlichen Verbänden je von Verband zu Verband quer zur Förderrichtung jeweils unterschiedlich eingerichtet werden.

Zur Durchführung des erfindungsgemäßen Verfahrens ist es notwendig, dass das Teigband durch Fördermittel transportiert wird. Hierbei ist es vorteilhaft, wenn das Teigband dabei auf eine Mitte oder Symmetrielinie der Fördermittel zentriert wird. Zur Beförderung des Teigbandes in einem erfindungsgemäßen Verfahren zur Teigbearbeitung eignen sich vorteilhaft Förderbänder. Je nach Bedarf kann hier mit einem Förderband oder mit mehreren, aneinander gereihten Förderbändern gearbeitet werden. Die im Verlaufe der Teigbearbeitung entstehenden Querreihen von Teigformlingen werden bei dem erfindungsgemäßen Verfahren bevorzugt nebeneinander liegend auf einem gemeinsamen Förderband bewegt. Diese nebeneinander liegenden Teigstücke werden aus dem ursprünglichen Teigband durch aufeinanderfolgendes Längs- und/oder Querschneiden oder Stanzen in quadratischer oder eckiger Form erzeugt.

Die solcherart erzeugten Teigstücke werden im weiteren Verlauf des Verfahrens verschiedenen Teigbearbeitungs- und/oder Gestaltungsprozessen unterworfen. Diese Verarbeitungs- oder Gestaltungsprozesse können entweder mit einer ganzen Querreihe oder auch nur mit einem Teil einer Querreihe durchgeführt werden. Zur Durchführung der Schnitt-, Stanz-, Gestaltungs- und/oder Verarbeitungsprozesse ist es vorteilhaft, wenn alle diese Prozesse auf der Basis einer gemeinsamen Taktzeit oder eines Vielfachen dieser Taktzeit durchgeführt werden. Durch eine solchermaßen synchrone Bearbeitung der Teigstücke kann eine besonders rationelle Fertigung gewährleistet werden. Da in einigen Bearbeitungsschritten nur ein Teil der Teigstücke bearbeitet werden muss, kann es vorkommen, dass ein oder mehrere Teigstücke oder Gruppen/Verbände von Teigstücken während eines Bearbeitungstaktes nicht bearbeitet werden, sondern ohne Bearbeitung ruhen beziehungsweise transportiert werden (Totzeit). Um weiterhin eine kontinuierliche Bearbeitung gewährleisten zu können, werden die einzelnen Schritte beziehungsweise Verarbeitungs-/Gestaltungstakte nach gleichen Zeitabständen durchgeführt. Somit ist sichergestellt, dass eine kontinuierliche Förderung und/oder Bearbeitung ohne das Entstehen von Staus oder Lücken durchgeführt werden kann. Zur Erzeugung eines derartigen Taktes kann vorteilhaft ein Taktband , z. B. nach der Einrichtung zum Querschneiden, verwendet werden. Bei einem derartigen Taktband wird das Transportgut, in diesem Fall die Teigformlinge, mit stillstehendem oder langsam bewegten Band vom vorhergehenden Transportband übernommen. Nachdem der Teigformling übernommen wurde, beschleunigt das Band, um derart einen Abstand zwischen den gerade übernommenen und den nachfolgenden Teigformling zu bringen. Wenn der gewünschte Abstand erreicht ist, wird das Band wieder abgebremst, um den nachfolgenden Teigformling zu übernehmen.

Bei der Durchführung der Gestaltungs- und/oder Verarbeitungsprozesse an einem Teil der in einer Querreihe nebeneinander liegenden Teigstücke kann es vorkommen, dass die bearbeiteten Teigstücke durch den Gestaltungsprozeß relativ zu den übrigen, nicht in den Gestaltungsprozeß integrierten Teigstücken derselben Querreihe, beschleunigt oder verzögert werden. Ein Beispiel für eine derartige Verzögerung ist die Bearbeitung eines rundgewirkten Teigstückes in einem Langwirker. Hierbei wird das Teigstück zwischen Förderband und einem darüber angebrachten Langwirker zusammengedrückt, so dass eine im wesentlichen längliche Rundform entsteht. Dabei wird das Teigstück entgegen der Förderrichtung des Förderbandes gerollt. Nach dem Verlassen des Langwirkers ist das Teigstück daher gegenüber den nicht langgewirkten Teigstücken der Querreihe, in der sich das Teigstück vor dem Langwirker befand, in Förderrichtung nach hinten versetzt. Eine derart versetzte Anordnung widerspricht aber der Erfindungsaufgabe, verschiedenartige Gebäckstücke zur einfachen, möglichst automatischen Weiterverarbeitung nach dem Gestaltungsbeziehungsweise Backprozeß herzustellen. Eine Ausrichtung der Gebäckstücke in einer Reihe quer zur Förderrichtung ist hierbei von großer Bedeutung. Die durch einen Gestaltungsprozeß entstandene räumliche Trennung einer Reihe muss also durch einen weiteren Schritt kompensiert werden. Es ist daher notwendig, dass während eines Gestaltungsprozesses verzögerte oder beschleunigte Gebäckstücke nach diesem Gestaltungsprozeß wieder derartig verzögert oder beschleunigt werden, dass sie wieder in einer Querreihe, die nicht notwendigerweise die ursprüngliche Querreihe sein muss, zu liegen kommen.

Für die Durchführung eines derartigen, erfindungsgemäßen Beschleunigungs- oder Verzögerungsvorgangs eines bearbeiteten Teigstücks bieten sich zum Beispiel Rollschleppen an. Eine derart über dem Förderband angebrachte Rollschleppe, die dem Teil des Bandes überdeckt, auf dem sich die in einem vorhergehenden Gestaltungsprozeß verzögerten oder beschleunigten Gebäckstücke befinden, bewirkt durch das Aufliegen auf den Gebäckstücken, die unter der Rollschleppe mittels des Förderbandes vorbeibewegt werden, eine Rollbewegung entgegen der Förderrichtung und ist somit geeignet, um die Gebäckstücke zu verzögern. Eine in einem erfindungsgemäßen Verfahren eingesetzte Rollschleppe besteht zum Beispiel aus einem Metall gewirkten, gewebeähnlichen Material, dass oberhalb des Förderbandes an einer Halterung befestigt ist und mit einem Teil seiner Länge das Förderband bestreicht. Diese das Förderband bestreichende Länge ist derart abgestimmt, dass ein durch die Rollschleppe verzögertes Gebäckteil nach seiner Freigabe durch die Rollschleppe entweder in seiner ursprünglichen Reihe oder in einer dahinter beziehungsweise davor befindlichen Querreihe zu liegen kommt.

Eine Rollschleppe kann im erfindungsgemäßen Verfahren aber auch zur Beschleunigung von Gebäckstücken eingesetzt werden. Besonders vorteilhaft kann bei dieser Ausführungsform der Verzögerungseinrichtung eine Rollschleppe mit einer Netz- und/oder Gliederstruktur verwendet werden, die (z. B. durch Zug) längbar ist. Hierbei wirkt die Rollschleppe in Zusammenarbeit mit einer Mulde zwischen zwei Förderbändern. Ein Gebäckteil läuft unter der Rollschleppe hindurch und landet, nachdem es von der Rollschleppe freigegeben wird, in der genannten Mulde zwischen den beiden Förderbändern. Die Rollschleppe fällt nun hinter dem Gebäckstück hinunter, wird ihrerseits durch das Förderband beschleunigt, dabei eventuell gelängt, und schubst das Gebäckstück derart aus der Mulde, das es beschleunigt wird und bis in die weiter vorne laufende Querreihe hinein rollt.

Nachdem solcherart eine zusammenhängende Querreihe von unterschiedlichen Gebäckstücken wiederhergestellt ist, können diese bearbeiteten Gebäckstücke zum Beispiel auf einem Blech automatisch abgesetzt werden und anschließend vollautomatisch weiter zum Backen verbracht werden. Alternativ können natürlich auch die Gebäckstücke bereits im Verlaufe der Beförderung gebacken werden und direkt vom Absetzen zum Verpacken verbracht werden.

Weitere Einzelheiten, Merkmale, Merkmalskombinationen sowie vorteilhafte Wirkungen auf der Basis der Erfindung ergeben sich aus der nachfolgenden Beschreibung zweckmäßiger beispielhafter Ausführungsformen der Erfindung und den Zeichnungen. Diese zeigen in
- Figur 1: verschiedene Stadien der Anordnung der Teigformlinge während des Teigbearbeitungs- und Transportvorgangs in schematischer Darstellung;
- Figur 2: in schematischer Darstellung die Herstellung einer Gebäckmischung aus drei unterschiedlichen Gebäcksorten;
- Figur 3: die Herstellung von zwei unterschiedlichen Gebäcksorten und die nachträgliche Ausrichtung der verzögerten Gebäcksorte mit der nichtbearbeiteten Gebäcksorte in einer gemeinsamen Querreihe in seitlicher Ansicht und zu verschiedenen Zeitpunkten, wobei
Figur 3a und 3b eine Ansicht der bearbeiteten sowie der unbearbeiteten Gebäckstücke zu Beginn des Verzögerungsvorgangs;
Figur 3c und 3d eine Darstellung der bearbeiteten und der unbearbeiteten Teigstücke während des Verzögerungsvorgangs und
Figur 3e und 3f eine Darstellung der bearbeiteten und unbearbeiteten Teigstücke nach Beendigung des Verzögerungsvorgangs darstellen.
- Figur 4: zeigt eine alternative Verzögerungsmethode in seitlicher Ansicht.
- Figur 5: zeigt die unbearbeiteten Teigformlinge auf einem Förderband.
- Figur 6: zeigt eine Mischung von unbearbeiteten und rundgewirkten Teigformlingen auf dem Förderband.
- Figur 7: zeigt die Teigformlinge mit Rollschleppe zur Verzögerung eines Teils der Teigformlinge in perspektivischer Ansicht.
- Figur 9: zeigt unbearbeitete, rundgewirkte und langgewirkte Teigformlinge auf einem Förderband.

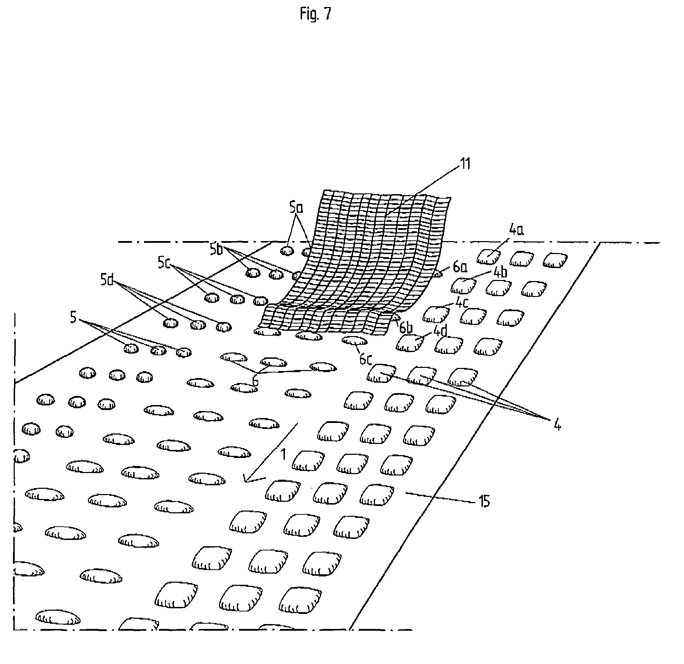

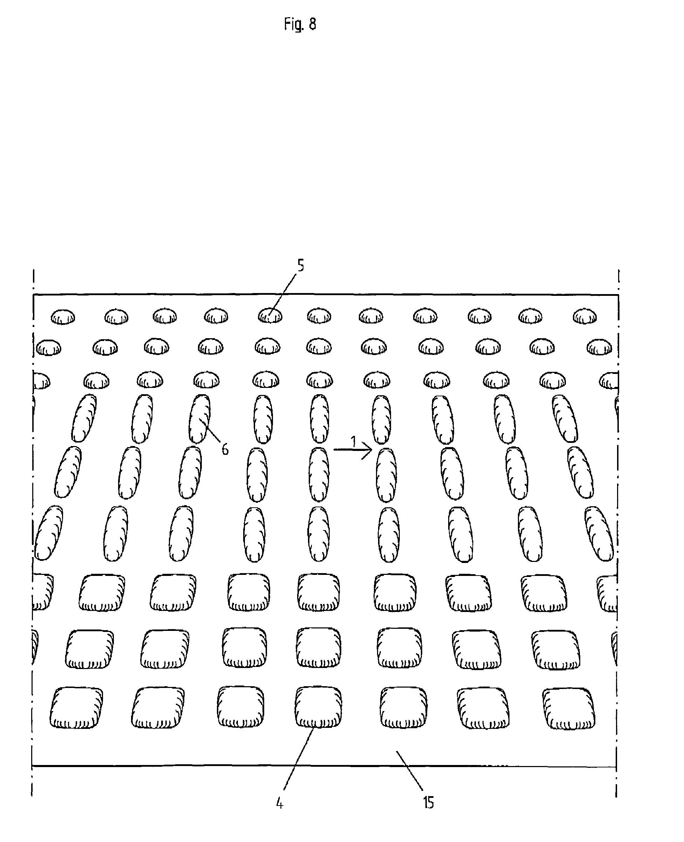

- Figur 8: zeigt die Teigformlinge aus Figur 7 bei Eintritt in eine Weiterbearbeitungsvorrichtung in perspektivischer Darstellung.

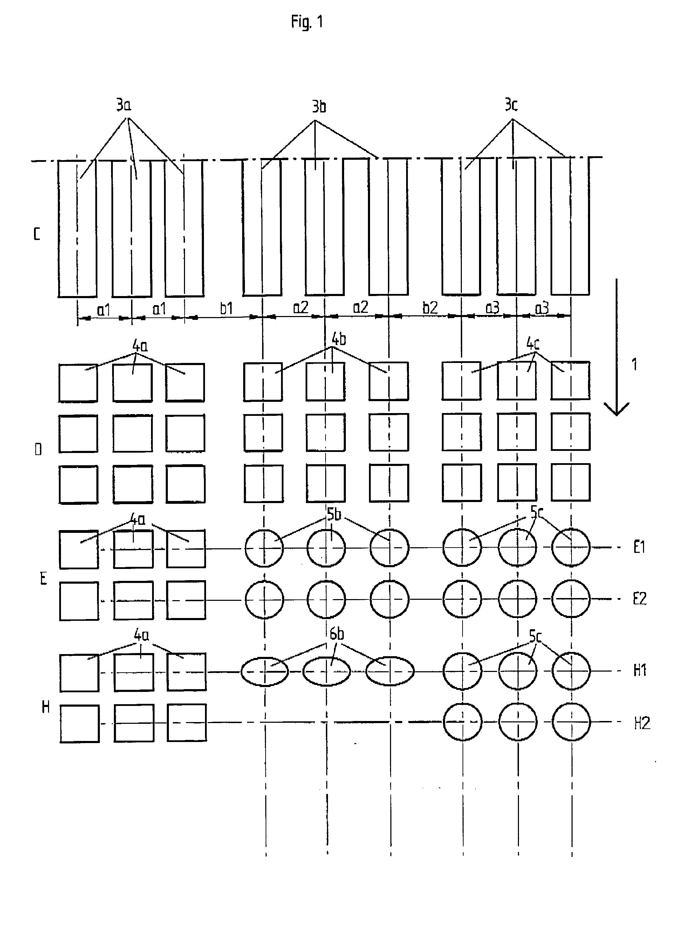

Figur 1 zeigt verschiedene Stadien der Teigbearbeitung während des Weitertransports der Teigformlinge bzw. des Teigbandes in schematischer Darstellung. Im Bereich C befinden sich die bereits längsgeschnittenen, gespreizten Teigbandstreifen (3a, 3b, 3c), deren Abstand untereinander schon für die weitere Verarbeitung angepasst ist. So ist erkennbar, dass eine Gruppe mittlerer Teigbandstreifen 3b untereinander den Abstand a2 aufweist. Zu den übrigen Teigbandstreifen 3a bzw. 3c haben die Teigbandstreifen 3b die Abstände b1 bzw. b2, die größer als die Abstände a2 sind. Die Abstände a1 bzw. a3 der Teigbandstreifen 3a bzw. 3c untereinander sind jeweils geringer als der Abstand a2 der Teigbandstreifen 3b untereinander. Alle Teigbandstreifen werden nun durch ein nichtdargestelltes Transportband in Transportrichtung 1 weitertransportiert. Nach dem Durchgang durch eine (nicht gezeigte) Vorrichtung zum Querschneiden befinden sich in einem folgenden Bereich D resultierende Teigformlingsgruppen 4a, 4b, 4c, die eine im Wesentlichen quadratische Grundform aufweisen. Nach dem teilweisen Durchgang durch einen nachfolgenden (nicht gezeichneten) Rundwirker befinden sich die resultierenden Teigformlingsgruppen 4a, 5b, 5c im Folgebereich E, in dem die nun rundgewirkten Teigformlinge 5a und 5b neben den unbearbeiteten, viereckigen 4c zu liegen gekommen sind. Bei den Schneid- und Rundwirkbearbeitungsschritten D und E ist kein zusätzliches Verzögern oder Beschleunigen notwendig, da der Brötchenrundwirker getaktet arbeitet und die Teigformlinge daher in der gemeinsamen Querlinie bzw. Querflucht E1 bzw. E2 verbleiben. Nach dem Durchgang durch eine (nicht gezeichnete) Vorrichtung zum Langwirken und zum erneuten Einordnen der langgewirkten Teigformlinge 6b in eine Querreihe bzw. Querflucht mit den übrigen Teigformlingen 4a, 5c befinden sich alle drei Gruppen 4a,6b,5c im Bereich H, in dem die Gruppe der jetzt langgewirkten Teigformlinge 6b zwischen der Gruppe der rundgewirkten Teigformlinge 5c und der Gruppe der viereckigen, unbearbeiteten Teigformlinge 4a liegt. Durch die Verzögerung im Langwirker und die anschließende zusätzliche Verzögerung/Beschleunigung zum erneuten Einordnen in eine gemeinsame Querreihe bzw. Querflucht sind die langgewirkten Teigformlinge 6b gegenüber den unbearbeiteten bzw. rundgewirkten Teigformlinge 5c und 4a um eine Querreihe zurückversetzt, befinden sich aber ansonsten wieder in fluchtender Lage in einer gemeinsamen Querreihe bzw. Querflucht H1 mit den umgebenden Teigformlingen. Hierbei ist gut zu erkennen, dass der größere Achsabstand a2 der Teigformlinge 6b notwendig ist, um die durch den Langwirker vergrößerte Ausdehnung in Querrichtung zur Förderrichtung 1 auf dem Transportband aufnehmen zu können. Anschließend können ein oder mehrere weitere Bearbeitungsschritte wie z. B. bestreuen, vorbacken oder backen durchgeführt werden, bevor die Teigformlinge verbandweise abgesetzt werden.

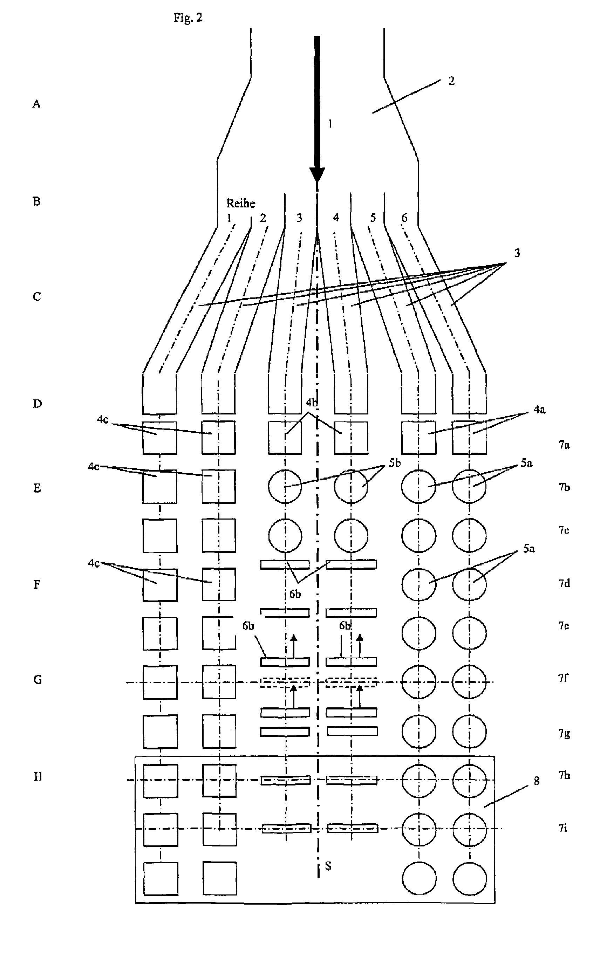

Figur 2 zeigt einen gleichartigen Vorgang in umfassenderer, schematischer Darstellung. So wird das Teigband, nachdem es von einem Satellitenkopf abgewalzt wurde, in Förderrichtung 1 voranbewegt und zunächst im Bereich A quergewalzt, beispielsweise mit einem Spiralquerwalzwerk, dabei verbreitert und anschließend mittels eines Kalibrierkopfes kalibriert. Nachdem im Bereich B das Schneiden von in diesem Beispiel sechs Teigbandstreifen 3 durchgeführt wurde, werden die Teigbandstreifen im Teilbereich C gespreizt und auf notwendige Abstände voneinander gebracht. Im Bereich D werden die Teigbandstreifen, beispielsweise mit einer Guillotine, zu Teigformlingen 4 quergeschnitten. Sie befinden sich jetzt in der Querreihe 7a. In Querreihe 7b werden nun die zwei Teigformlingsgruppen 4a und 4b der drei Gruppen 4a, 4b, 4c zu den runden Teigformlingsgruppen 5a und 5b rundgewirkt. Nach dem Weitertransport über die Querreihe 7c erfolgt in Querreihe 7d die Weiterverarbeitung der Teigformlinge 5b zu langgewirkten Teigformlingen 6b. Durch die Behandlung im Langwirker wird die zugeordnete Teigformlingsgruppe 6b gegenüber den benachbarten Teigformlingsgruppen 4c, 5a verzögert und aus der Querlinie 7d herausversetzt. Analog gilt dies für die Reihe 7e. Zwischen den Reihen 7f und 7g wird mit (nicht gezeichneten) Verschleppungsmitteln eine Verzögerung der aus der Reihe entfernten langgewirkten Teigformlinge gegen die Transportrichtung 1 des Bandes durchgeführt, um diese Teigformlinge in der nachfolgenden Querreihe wieder mit danebenliegenden Teigformlingen 4c, 5a synchronisiert zum Liegen zu bekommen. Ein derartiges, neu synchronisiertes Teigformlings-Paar 6b befindet sich so in Reihe 7g und wurde gerade von einer Verzögerungseinrichtung freigegeben. Die Pfeile an den Teigformlingen 6b zwischen Reihe 7f und 7g bzw. Reihe 7e und 7f zeigen die der Transportrichtung 1 entgegengerichtete Verzögerungsbewegung der neuerlich verzögerten Teigformlinge 6b relativ zur Transportrichtung 1 des Laufbandes an. Im Bereich H schließlich werden die Teigformlinge gemeinsam auf Bleche 8 abgesetzt und können derart zur weiteren Verarbeitung ohne manuelle Handhabe weitertransportiert werden.

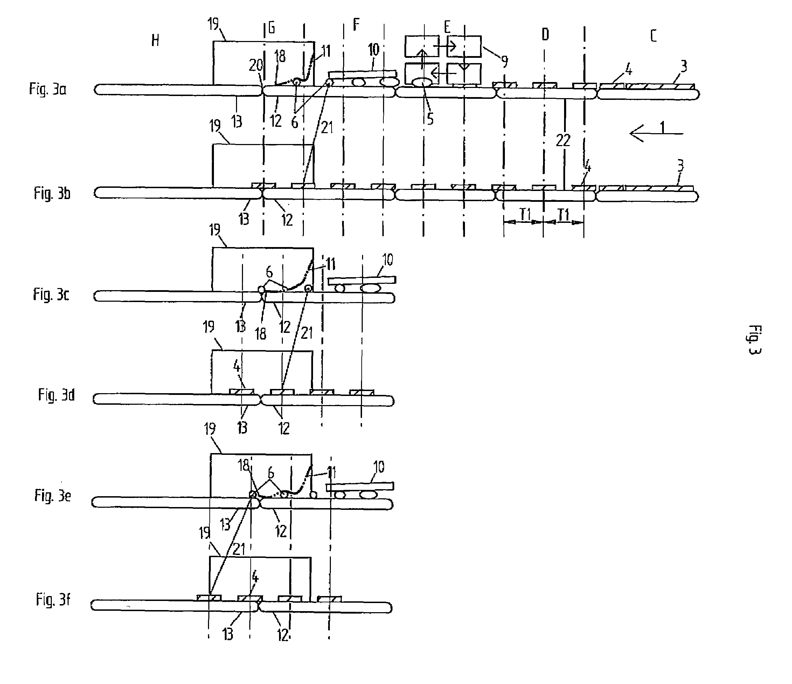

Figur 3 zeigt einen gleichartigen Ablauf in einer seitlichen schematischen Ansicht, wobei jeweils die Zeichnungsteile 3a und 3b, 3c und 3d sowie 3e und 3f zum gleichen Zeittakt gehören. Die Figuren 3a, 3c und 3e zeigen hierbei jeweils den Teigbandstreifen, bei dem eine Verzögerung eines Teigformlings durch einen Bearbeitungsschritt stattfindet, während die Figuren 3b, 3d und 3f die jeweils zugehörigen unbearbeiteten Teigformlinge zeigen. Figur 3a zeigt das Teigband 3, das zunächst im Bereich C mittels eines Spreizbandes gespreizt und dann zwischen dem Bereich C und D mittels einer Guillotine zu Teigformlingen 4 quergeschnitten wird. Daran anschließend befindet sich ein Taktband 22 (Bereich D). Hier wird der für die weiteren Bearbeitungsschritte notwendige Abstand T1 der Teigstücke 4 in Transportrichtung 1 hergestellt, indem das Taktband bei der Übergabe der Teigstücke 4 vom vorhergehenden Band stillsteht, dann beschleunigt und wieder stoppt, wenn der gewünschte Abstand T1 erreicht ist. Im Bereich E werden dann die quadratischen, unbearbeiteten Teigformlinge 4 durch einen Rundwirker 9 zu runden Teigformlingen 5 weiterverarbeitet werden. Zu diesem Zeitpunkt befinden sie sich noch im gleichen Takt wie die unbearbeiteten Teigformlinge 4 in der darunter dargestellten Zeichnung 3b, da der Rundwirker 9 mit dem Transportband 1 mitläuft , sich dann am Ende der Bearbeitung nach oben und anschließend zurück zum Startpunkt der Bearbeitung bewegt. Diese Gesamtbewegung des Rundwirkers 9 wird zyklisch durchgeführt. Im nächsten Abschnitt F werden die rundgewirkten Teigformlinge durch einen Langwirker 10 zu langgewirkten Teigformlingen weiterverarbeitet, durch die Bearbeitung werden sie gegenüber den in Zeichnung 3b erkennbaren unbearbeiteten Teigformlingen verzögert. Es stellt sich nach dem Langwirker 10 eine Langwirkverzögerung 21 ein, die je nach Art und Ausführung des Langwirkers auch mehr als einen Querreihenabstand betragen kann. Im Bereich G befindet sich daher eine Verzögerungseinrichtung mit einer Rollschleppe 11 zur Wiederherstellung der Lage der unbearbeiteten und der bearbeiteten Teigformlinge in einer Linie quer zur Förderrichtung 1. Der unter der Rollschleppe 11 befindliche Teigformling 6 ist gegenüber einem unbearbeiteten Teigformling 4 gleichen Zeittaktes aus Figur 3d entgegen der Transportrichtung 1 des Bandes versetzt bzw. verzögert. Figur 3c zeigt den langgewirkten Teigformling 6 in der Position zwischen den beiden Transportbändern 12 und 13. Der langgewirkte Teigformling 6 ist bereits von der Rollschleppe 11 freigegeben worden und liegt jetzt in einer Vertiefung, die zwischen den beiden Transportbändern 12 und 13 mit deren gegenüberliegenden Enden gebildet ist. Die Rollschleppe 11 ist vom Teigformling 6 heruntergefallen und wird nun ihrerseits durch das Transportband beschleunigt. Durch die Ketten- bzw. Gliederstruktur der Rollschleppe (11) wird diese durch das Förderband dabei in Transportrichtung gelängt. Der langgewirkte Teigformling ist immer noch gegenüber den darunter in Zeichnung 3d dargestellten unbearbeiteten Teigformlingen 4 verzögert und entgegen der Transportrichtung 1 nach hinten versetzt. In Zeichnung 3e ist der Teigformling 6 durch die auf das Band gefallene, gelängte Rollschleppe 11 mittels deren Ende aus der Vertiefung zwischen den beiden Transportbändern 12, 13 hinausgestoßen und beschleunigt worden, so dass er sich nach dem Ausrollen wieder in der in der darunterliegenden Zeichnung 3f angedeuteten Querreihe der unbearbeiteten, vorher vorausgeeilten Teigformlinge 4 befindet.

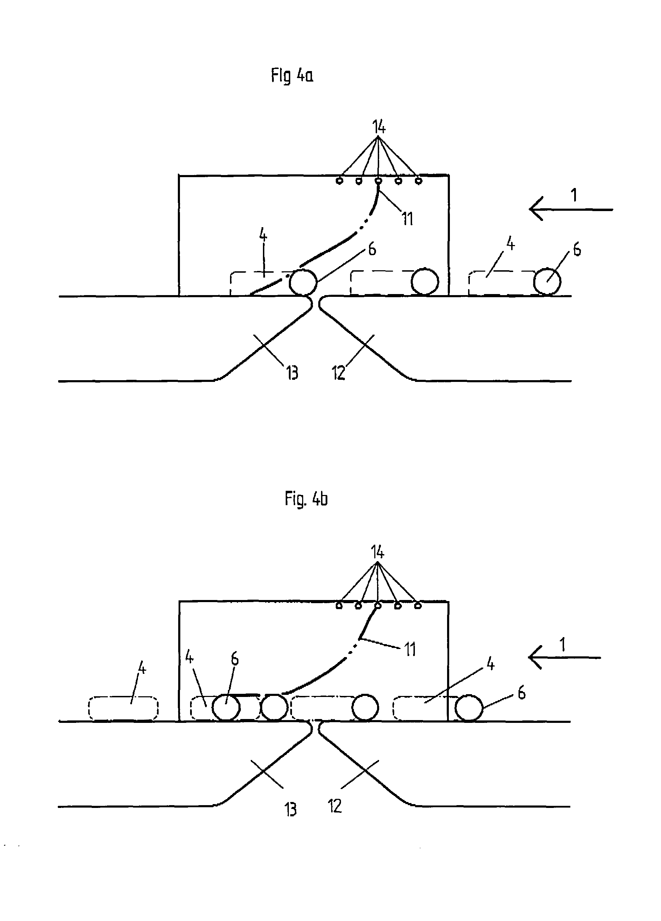

Figur 4 zeigt eine alternative Ausführungsform entsprechend dem obigen Bereich G zum Verzögern der nicht mehr im Takt befindlichen, bearbeiteten Teigformlinge. Die bearbeiteten Teigformlinge 6 sind gegenüber den unbearbeiteten Teigformlingen 4 ursprünglich gleicher Querreihe gegen die Transportrichtung 1 des Bandes zurückversetzt. Sie befinden sich auch nicht in einer Reihe mit ursprünglich nachfolgenden unbearbeiteten Teigformlingen. Bei dieser Ausführungsform bleiben die bearbeiteten Teigformlinge 6 nicht in der Vertiefung zwischen den beiden Bändern 12 und 13 liegen, sondern werden nur durch die Rollschleppe 11 verzögert. Figur 4a zeigt den Beginn der Verzögerung des vordersten langgewirkten Teigformlings 6 durch die Rollschleppe 11 gegenüber der Querreihe mit den unbearbeiteten Teigformlingen 4. Der langgewirkte Teigformling 6 wird durch die Rollschleppe in einer Rotation versetzt, die zur Verzögerung des langgewirkten Teigformlings 6 relativ zum Transportband und den unbearbeiteten Teigformlingen 4 führt. In Figur 4b ist der Zustand kurz vor der Freigabe des vordersten, langgewirkten Teigformlings 6 durch die Rollschleppe 11 dargestellt, der langgewirkte Teigformling 6 befindet sich in dieser Darstellung wieder in einer gemeinsamen Querreihe mit unbearbeiteten Teigformlingen 4, allerdings in einer um eine Querreihe zurückversetzten Position. In Fig. 4a und 4b sind auch die zusätzlichen Befestigungspunkte 14 zur Positionierung der Anhängung der Rollschleppe dargestellt, was dazu genutzt wird, die Verzögerung des bearbeiteten Teigformlings 6 gegenüber dem unbearbeiteten Teigformling 4 individuell auf die aktuelle Teigform einstellen zu können.

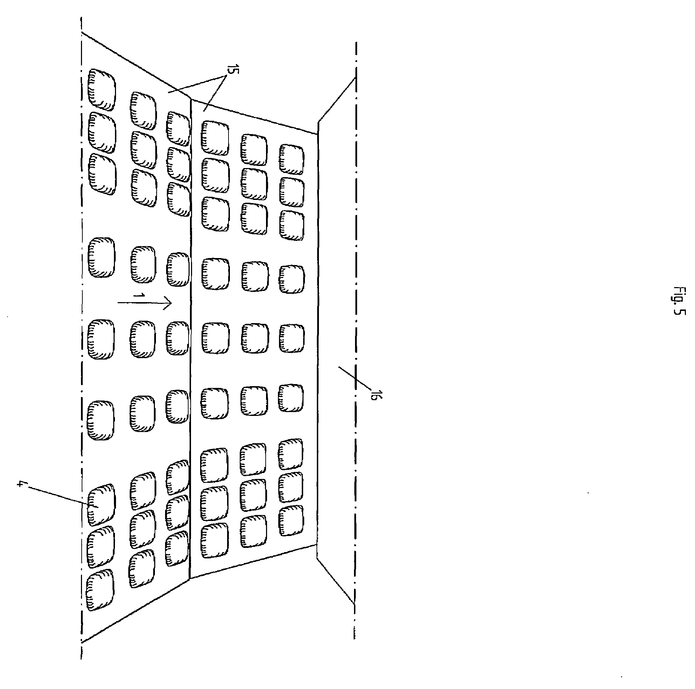

Figur 5 zeigt die geschnittenen, aber noch unbearbeiteten Teigformlinge auf zwei aufeinanderfolgenden Bändern 15, die in Transportrichtung 1 auf eine erste Bearbeitungsstation 16 zu bewegt werden. Auch hier ist erkennbar, dass die Teigformlinge der mittleren Gruppe einen deutlich größeren Abstand zueinander haben als die der jeweils außen liegenden Teigformlinge. Die beiden Trensportbänder 15 weisen einen Winkel zwischen ihren jeweiligen Transportebenen zueinander auf.

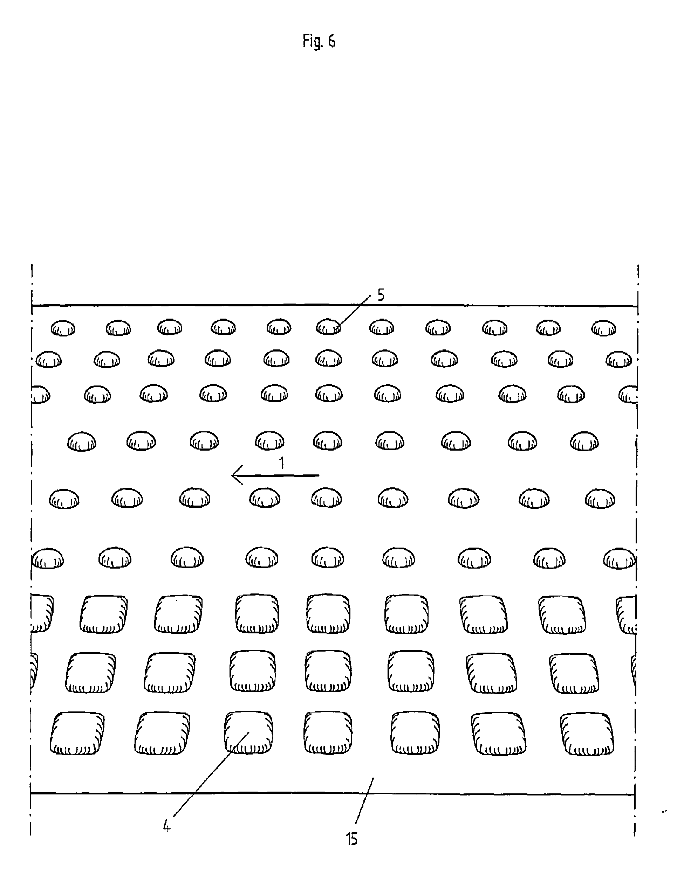

Figur 6 zeigt die Teigformlinge nach dem Bearbeitungsschritt des Rundwirkens in einer perspektivischen Darstellung von der Seite. Im vorderen Bereich befinden sich die unbearbeiteten, viereckigen Teigformlinge 4, im hinteren Bereich sind die rundgewirkten Teigformlinge 5 zu erkennen, wobei die im mittleren Bereich des Bandes befindlichen Teigformlinge der mittleren Gruppe wieder einen größeren seitlichen Abstand zueinander haben als die in den Seitenbereichen des Bandes befindlichen.

Figur 7 zeigt in perspektivischer Darstellung das Mittel zur Beeinflussung der Lage der langgewirkten Teigformlinge 6 gegenüber den jeweiligen Teigformlingsquerreihen in der beispielhaften Form einer Rollschleppe 11. Die Teigformlinge 4, 5 und 6 werden durch das Band 15 in Transportrichtung 1 bewegt. Im mittleren Bereich des Bandes befindet sich die Rollschleppe 11, die die Gruppe mit den langgewirkten Teigformlingen 6 verzögert und dabei in eine nachfolgende, fluchtende Querreihe mit den äußeren Teigformlingsgruppen 4 und 5 bewegt. Es ist zu erkennen, dass der langgewirkte Teigformling 6a (teilweise durch die Rollschleppe 11 verdeckt) in Transportrichtung zwischen den beiden unbearbeiteten Teigformlingen 4a, 4b liegt und daher nicht mehr in der ursprünglichen, nun vorauseilenden Querreihe, die aus den Teigformlingen 4b und 5a gebildet wird, transportiert wird. Der bereits von der Rollschleppe erfasste Teigformling 6b ist schon an der in Transportrichtung nachfolgende Querreihe, die aus den Teigformlingen 4c, 5b gebildet wird, angenähert, ist aber noch nicht endgültig synchron mit den nicht verzögerten Teigformlingen 4, 5. Die gerade von der Rollschleppe 11 freigegebenen Teigformlinge 6c dagegen befinden sich in fluchtender Lage zu aus den Teigformlingen 4d und 5c gebildeten, ursprünglich nachfolgenden Querreihe. Auch alle in Transportrichtung 1 weiter vorne liegenden Reihen befinden sich in in Querrichtung fluchtender Lage.

Figur 8 zeigt die Teigformlinge nach einer weiteren Bearbeitungsstufe. Die mittleren Teigformlinge 6 sind nun durch einen Langwirker bearbeitet und durch die Vorrichtung 11 zur Beeinflussung bzw. Verzögerung der Lage wieder in einer der Querreihen ausgerichtet.

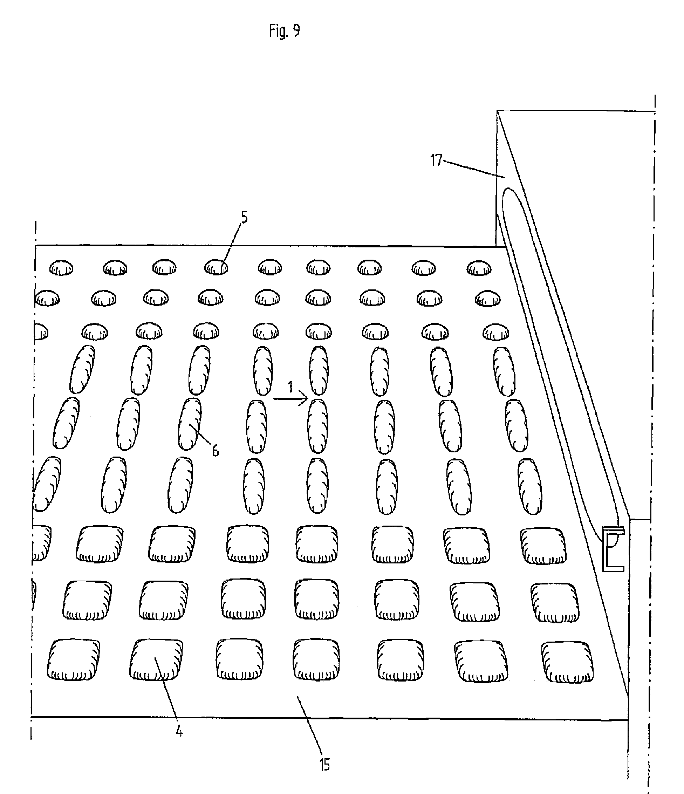

In Figur 9 werden die Teigformlinge, wie nach Figur 7 bearbeitet, in eine weitere Vorrichtung 17 zur Weiterverarbeitung, zum Beispiel zum Backen, verbracht.

### Bezugszeichenliste:

- 1: Transportrichtung
- 2: gemeinsames Teigband
- 3: geschnittene Teigbänder
- 4: quergeschnittene Teigformlinge
- 5: rundgewirkte Teigformlinge
- 6: langgewirkte Teigformlinge
- 7: Querreihen bzw. Querfluchten
- 8: Absetzbleche
- 9: Rundwirker
- 10: Langwirker
- 11: Rollschleppe
- 12,13: Transportband
- 14: Befestigungspunkte für Rollschleppe
- 15: Transportband
- 16,17: Teigbearbeitungsvorrichtung
- 18: Rollschleppenende
- 19: Rollschleppengehäuse
- 20: Mulde zwischen Transportband 12,13
- 21: Langwirkverzögerung
- 22: Taktband
- T1: Taktabstand
- A-H: Transport- und Bearbeitungsbereiche
- a1-a3: Abstand der Teigbänder untereinander
- b1,b2: Abstand der Teigbandgruppen
- S: Symmetrielinie

## Patentansprüche

1. Verfahren zur Herstellung von unterschiedlich gestalteten Teigformlingen (4,5,6) aus einem kontinuierlichen Teigband (2,3), wobei dieses bezüglich seiner Längsrichtung längsgeschnitten und schräg-, rund- und/oder quergestanzt oder -geschnitten wird, und die dabei entstehenden Teigstücke (4a,4b,4c) voneinander entfernt und in eine gemeinsame Förderrichtung (1) bewegt werden, **dadurch gekennzeichnet, dass** in der weiteren Beförderung die Teigstücke (4a,4b,4c) gleichzeitig zu den Teigformlingen (4,5,6) unterschiedlicher Gestalt verarbeitet und dabei ganz oder teilweise in aufeinander folgenden Querreihen (7a bis 7g) nebeneinander liegend gehalten und/oder zum jeweiligen Nebeneinanderliegen in aufeinander folgenden Querreihen gebracht werden, wobei die Querreihen (7a bis 7g) quer zur Förderrichtung verlaufen und im Zuge der Beförderung Teigstücke (4,5,6) oder Teigformlinge unterschiedlicher Gestalt erhalten.

2. Verfahren nach Anspruch 1, **dadurch gekennzeichnet, dass** die unterschiedlich gestalteten Teigformlinge (4,5,6) in den aufeinander folgenden Querreihen (7a bis 7g) nebeneinander liegend auf einer stillgehaltenen Unterlage (8) abgesetzt werden.

3. Verfahren nach Anspruch 2, **dadurch gekennzeichnet, dass** von der Unterlage (8) die Teigformlinge (4,5,6) Querreihe (7h,7i) für Querreihe (7h,7i) entnommen und gegebenenfalls als Sortiment unterschiedlicher Gestaltungen (4,5,6) in ein gemeinsames Behältnis gepackt werden.

4. Verfahren nach Anspruch 1, 2 oder 3, **dadurch gekennzeichnet, dass** die Teigstücke (4,5,6) zum Nebeneinanderliegen in der Querreihe (7a bis 7i) ganz oder teilweise auf einer gemeinsamen, zur Förderrichtung (1) quer verlaufenden Querflucht oder Querlinie (7) gehalten und/oder gebracht werden.

5. Verfahren nach Anspruch 1, 2, 3 oder 4, **dadurch gekennzeichnet, dass** innerhalb einer Querreihe (7a) mehrere Gruppen oder Verbände mit nebeneinander liegenden Teigstücken (4a,4b,4c) jeweils einheitlicher Gestalt gebildet werden, wobei die Teigstücke (4a,4b,4c) innerhalb eines Verbandes einheitliche Abstände (a1,a2,a3) quer zur Förderrichtung voneinander haben.

6. Verfahren nach Anspruch 5, **dadurch gekennzeichnet, dass** die Abstände (b1,b2) von Verband zu Verband quer zur Förderrichtung unterschiedlich groß eingerichtet werden.

7. Verfahren nach einem der vorangehenden Ansprüche, **dadurch gekennzeichnet, dass** das oder die Teigbänder (2,3) durch Fördermittel bewegt und dabei auf eine Mittel- oder sonstige Symmetrielinie (S) der Fördermittel zentriert wird.

8. Verfahren nach Anspruch 7, **dadurch gekennzeichnet, dass** die Fördermittel mit einem oder mehreren, solchenfalls aneinander gereihten Förderbändern (12,13) realisiert sind.

9. Verfahren nach einem der vorangehenden Ansprüche, **dadurch gekennzeichnet, dass** die Querreihen (7a bis 7g) nebeneinander liegender Teigstücke (4,5,6) auf einem gemeinsamen Förderband bewegt werden.

10. Verfahren nach einem der vorangehenden Ansprüche, **dadurch gekennzeichnet, dass** mit dem Längs- und Querschneiden nebeneinander liegende Teigstücke (4a,4b,4c) in quadratischer oder sonst eckiger Form erzeugt werden.

11. Verfahren nach einem der vorangehenden Ansprüche, **dadurch gekennzeichnet, dass** ein Teil der in einer Querreihe (7a bis 7g) nebeneinander liegenden Teigstücke (4,5,6) einem oder mehreren unterschiedlichen Gestaltungs- oder Verarbeitungsprozessen oder alle nebeneinander liegenden Teigstücke (4,5,6) einer Querreihe (7a bis 7g) unterschiedlichen Gestaltungsprozessen unterworfen werden, wobei alle nebeneinander liegenden Teigstücke (4,5,6) in der gemeinsamen Querreihe (7a bis 7g) und/oder auf einer gemeinsamen Querflucht oder Querlinie (E1,E2,H1,H2) gehalten werden.

12. Verfahren nach einem der vorangehenden Ansprüche, **dadurch gekennzeichnet, dass** die Schritte des Schneidens der Teigstücke (4,5,6) und des Be-, Verarbeitens und/oder Gestaltens der Teigstücke (4,5,6) und gegebenenfalls des Absetzens der fertig gestalten Teigformlinge (4,5,6) auf eine Unterlage (8) jeweils synchron auf der Basis einer einheitlichen Taktzeit und/oder einem insbesondere ganzzahligem Vielfachen davon durchgeführt werden.

13. Verfahren nach Anspruch 12, **dadurch gekennzeichnet, dass** die einzelnen Schritte beziehungsweise Verarbeitungs- oder Gestaltungstakte nach gleichen Zeitabständen durchgeführt werden.

14. Verfahren nach Ansprüche 12 oder 13, **dadurch gekennzeichnet, dass** ein Teil der in einer Querreihe (7a bis 7g) nebeneinander liegenden Teigstücke (4,5,6) während eine Taktzeit nicht bearbeitet oder nicht gestaltet wird (Totzeit).

15. Verfahren nach einem der vorangehenden Ansprüche, **dadurch gekennzeichnet, dass** ein Teil (6b) der in einer Querreihe (7a bis 7g) nebeneinander liegenden Teigstücke (4,5,6) einem Gestaltungs- oder Verarbeitungsprozess unterworfen wird, der zu einer Verzögerung oder Verlangsamung und/oder Beschleunigung der Förderbewegungen dieser Teigstücke (4,5,6) gegenüber den sonst nebeneinander liegenden Teigstücken (4,5,6) dieser Querreihe (7a bis 7g) führt, und dass die so verzögerten beziehungsweise beschleunigten Teigstücke (4,5,6) einem weiteren, derart komplementären Verzögerungs- oder Bremsprozess und/oder Beschleunigungsprozess unterworfen werden, dass die verzögerten beziehungsweise beschleunigten Teigstücke (6b) in eine gemeinsame Querflucht oder Querlinie (7) mit einer nachfolgenden beziehungsweise vorauseilenden Querreihe (7a bis 7g) nicht verzögerter beziehungsweise nicht beschleunigter Teigstücke (4,5) geraten.

16. Verfahren nach Anspruch 15, **dadurch gekennzeichnet, dass** zur Bremsverzögerung eine auf der jeweiligen Oberseite der Teigstücke (6) aufliegende Rollschleppe (11) mit Netz- oder Kettenstruktur verwendet wird.

17. Verfahren nach Anspruch 16, **dadurch gekennzeichnet, dass** zur Beschleunigung des oder der Teigstücke das Ende (18) der Rollschleppe (11) verwendet wird, wofür eine derart in sich verlängerbare und angeordnete Rollschleppe eingesetzt wird, dass diese bei Freigabe des Teigstücks (6) auf ein das Teigstück transportierendes Förderband (12) fällt, darauf gleitet und dabei von diesem so verlängert wird, dass das Rollschleppen-Ende (18) in Förderrichtung gegen das Teigstück (6) zu dessen Beschleunigung stößt.

18. Verfahren nach einem der vorangehenden Ansprüche, **dadurch gekennzeichnet, dass** in einer Querreihe (7a) ausschließlich Teigstücke (4,5,6) mit quadratischer oder sonst eckiger Form befördert werden, und in einer oder mehreren der in Förderrichtung (1) vorausgehenden Querreihen (7a bis 7g) jeweils ein Teil (5a,5b) der nebeneinander liegenden Teigstücke (4c,5a,5b) rundgewirkt wird.

19. Verfahren nach einem der vorangehenden Ansprüche, **dadurch gekennzeichnet, dass** in einer oder mehreren der dem Schneiden in Förderrichtung nachfolgenden Querreihen (7a bis 7g) jeweils ein Teil (6b) der nebeneinander liegenden Teigstücke (4a,5c,6b) langgewirkt wird.

20. Verfahren nach Anspruch 19, **dadurch gekennzeichnet, dass** Langwirken (7d) nach einem oder mehreren Rundwirk-Schritten oder -Takten (7b,7c) durchgeführt wird.

21. Teigverarbeitungsanlage zur Durchführung des Verfahrens nach einem der vorangehenden Ansprüche, bei der, jeweils oberhalb von Teig-Fördermitteln, ein oder mehrere Teigbandformer (A) und danach Teigband-Schneid- oder Stanzmittel (B,D) und Teigband-Spreizmittel oder Teigstück-Vereinzelungsmittel (C) derart angeordnet und ausgebildet sind, dass nacheinander quer zur Förderrichtung (1) verlaufende Querreihen (7a bis 7g) mit in Förderrichtung nebeneinander liegenden Teigstücken (4,5,6) entstehen, die von den Teig-Fördermitteln wenigstens einer nachgeordneten Teigstück-Bearbeitungs- oder -Gestaltungsmaschine (9,10) zugeführt und aus dieser wegtransportiert werden, **dadurch gekennzeichnet, dass** die Bearbeitungs- und Gestaltungsmaschine (9,10) zum Erfassen lediglich eines Teils der Teigstücke (4a,5b) einer Querreihe (7a bis 7g) angeordnet ist und mit den Teig-Fördermitteln über Synchronisationsmittel (11;11,14) derart in Wechselwirkung steht, dass nach dem Ausgang der Bearbeitungs- und Gestaltungsmaschine (9,10) die bearbeiteten oder gestalteten Teigstücke (5c,6b) wieder in einer gemeinsamen Querreihe (7h), Querflucht oder Querlinie (H1) mit den vorher von der Bearbeitungs- und Gestaltungsmaschine (9,10) nicht erfassten Teigstücken (4c) auf oder in den Teig-Fördermitteln liegen.

22. Teigverarbeitungsanlage zur Durchführung des Verfahrens nach einem der vorangehenden Ansprüche, bei der, jeweils oberhalb von Teig-Fördermitteln, ein oder mehrere Teigbandformer (A) und danach Teigband-Schneid- oder Stanzmittel (B,D) und Teigband-Spreizmittel (C) oder Teigstück-Vereinzelungsmittel derart angeordnet und ausgebildet sind, dass nacheinander quer zur Förderrichtung (1) verlaufende Querreihen (7a bis 7g) mit in Förderrichtung nebeneinander liegenden Teigstücken (4,5,6) entstehen, die von den Teig-Fördermitteln mehreren nachgeordneten Teigstück-Bearbeitungs- und/oder -Gestaltungsmaschinen (9,10) zugeführt und aus diesen wegtransportiert werden, **dadurch gekennzeichnet, dass** die Bearbeitungs- und/oder Gestaltungsmaschinen (9,10) zur Erzeugung unterschiedlicher Bearbeitungsprozesse oder Teigstück-Gestaltungen ausgebildet und nebeneinander zum parallelen Erfassen mindestens eines Teils der Teigstücke (5b,5a) einer Querreihe angeordnet sind und mit den Teig-Fördermitteln über Synchronisationsmittel (11;11,14) derart in Wechselwirkung stehen, dass nach den Ausgängen der Bearbeitungs- und Gestaltungsmaschinen (9,10) die bearbeiteten oder gestalteten Teigstücke (6b) wieder in einer gemeinsamen Querreihe (7f), Querflucht oder Querlinie (H1) gegebenenfalls mit vorher von den Bearbeitungs- und Gestaltungsmaschinen nicht erfassten Teigstücken (4c) auf oder in den Teig-Fördermitteln liegen.

23. Anlage nach Ansprüche 21 oder 22, **dadurch gekennzeichnet, dass** der einen oder wenigstens einer (9) der Teigstück-Bearbeitungs- und/oder - Gestaltungsmaschinen (9,10) mindestens eine weitere Teigstück-Bearbeitungs- und/oder -Gestaltungsmaschine (10) nachgeordnet ist, die mit den Teig-Fördermitteln über Synchronisationsmittel derart in Wechselwirkung steht, dass nach dem Ausgang der weiteren Bearbeitungs- und Gestaltungsmaschine (10) die bearbeiteten oder gestalteten Teigstücke (6b) wieder in einer gemeinsamen Querreihe (7h), Querflucht oder Querlinie (H1) mit von der weiteren Bearbeitungs- und Gestaltungsmaschine (10) nicht erfassten Teigstücken (5a) auf oder in den Teig-Fördermitteln liegen.

24. Anlage nach einem der vorangehenden Ansprüche, **dadurch gekennzeichnet, dass** die eine oder wenigstens eine (10) der Teigstück-Bearbeitungs- und/oder -Gestaltungsmaschinen (9,10) zum Erfassen nur eines Teils (5b) der Teigstücke (4c,5b,5a) einer Querreihe (7i) angeordnet und mit einer Teigstück-Verzögerungseinrichtung (Fig.4a,Fig.4b) derart versehen ist, dass nach dem Ausgang dieser Teigstück-Bearbeitungs- und/oder - Gestaltungsmaschine (10) die davon bearbeiteten oder gestalteten Teigstücke (6b) auf oder in den Teig-Fördermitteln gemeinsam mit Teigstücken (4c) in einer Querreihe (7h), Querflucht oder Querlinie (H1) liegen, die von dieser Bearbeitungs- und Gestaltungsmaschine (10) nicht erfasst wurden und einer der erstgenannten Querreihe (7i) nachfolgenden Querreihe (7a bis 7h) angehören.

25. Anlage nach einem der vorangehenden Ansprüche, **dadurch gekennzeichnet, dass** die Synchronistionsmittel und/oder Teigstück-Vereinzelungsmittel ein den Teigband-Schneid- oder Stanzmitteln unmittelbar nachgeordnetes Takt-Förderband (D) mit einer Steuerung derart umfassen, dass es bei Teigaufnahme von den Teigband-Schneid- oder Stanzmitteln stillsteht und dann entsprechend einem vorbestimmten Teigstück-Abstand (T1) in der Förderrichtung (1) bewegt, gegebenenfalls beschleunigt wird.

26. Verzögerungseinrichtung für die Teigstück-Bearbeitungs- und/oder - Gestaltungsmaschine (10) der Teigverarbeitungsanlage nach Anspruch 21 bis 25, **gekennzeichnet durch** die Realisierung mit einer zu den Teig-Fördermitteln herabhängenden Teigstück-Rollschleppe (11), die an einem Gestell (19) oberhalb der Teig-Fördermittel derart befestigt und angeordnet ist, dass das freie Schleppenende (18) auf den sich bewegenden Teig-Fördermitteln in Förderrichtung (1) gestreckt oder durchhängend schleifen oder gleiten kann, und ein zwischen den Fördermitteln und der Rollschleppe (11) bewegtes Teigstück (6,6b) auf den Fördermitteln entgegen der Förderrichtung (4) gerollt wird.

27. Verzögerungseinrichtung nach Anspruch 26, **dadurch gekennzeichnet, dass** die Länge des durchhängenden Abschnitts der Rollschleppe (11) so bemessen ist, dass die Fördergeschwindigkeit des Teigstücks entsprechend der Verzögerungszeit der Teigstück-Bearbeitungs- und/oder - Gestaltungsmaschine (10) gegenüber einer Anlagen-Taktzeit, insbesondere komplementär zum Unterschied zwischen Anlagen-Taktzeit und Verzögerungszeit, verringert wird.

28. Verzögerungseinrichtung nach Anspruch 26 oder 27, **dadurch gekennzeichnet, dass** die Rollschleppe (11) mit einer durch Zug verlängerbaren oder ausziehbaren Struktur, insbesondere Ketten- oder Netzstruktur, realisiert ist.

29. Verzögerungseinrichtung für die Teigstück-Bearbeitungs- und/oder - Gestaltungsmaschine (10) der Teigverarbeitungsanlage nach Anspruch 21 bis 25, **gekennzeichnet durch** die Realisierung mit einer zwischen zwei aufeinander folgenden Förderbändern (12,13) gebildeten Mulde (20) zur Aufnahme und zum Unterbinden einer Linear- beziehungsweise Förderbewegung des Teigstücks (6).

30. Verzögerungseinrichtung nach Anspruch 29 und einem der Ansprüche 26 - 28, **gekennzeichnet durch** eine Kombination der Rollschleppe (11) mit der Mulde (20), indem letztere derart angeordnet ist, dass Rollschleppen-Ende (18) nach Herabfallen von einem Teigstück (6) in die Mulde (20) insbesondere mit Hilfe von Fördermitteln geraten kann.
